# EUROPEAN PATENT APPLICATION

(11) **EP 1 916 481 A2**
(43) Date of publication of application: **30.04.2008**
(21) Application number: 07117187.0
(22) Date of filing: 25.09.2007
(51) Int. Cl.: F23R 3/28

(54) **Premixing device, gas turbines comprising the premixing device, and methods of use**

(30) Priority: 29.09.2006 US 540287
(71) Applicant: General Electric Company, Schenectady, NY 12345 (US)
(72) Inventor: Evulet, Andrei Tristan, Clifton Park, NY 12065 (US)
(74) Representative: Illingworth-Law, William Illingworth

(57) **Abstract**

A fuel/oxidant premixing device (102) for a gas turbine (100) includes an annular array of Coanda profiled fuel injected airfoils (106) configured to receive a fluid stream (20) containing the oxidant, wherein each one of the airfoils comprises a leading edge (120), a trailing edge (122) and a fuel injection opening (124) configured for introducing fuel (32) at about the leading edge (120) to provide a Coanda effect. Also disclosed herein are methods for its operation.

## Description

### BACKGROUND

The disclosure relates generally to combustion turbines, or more specifically, combustion turbines comprising fuel premixers and methods for their use.

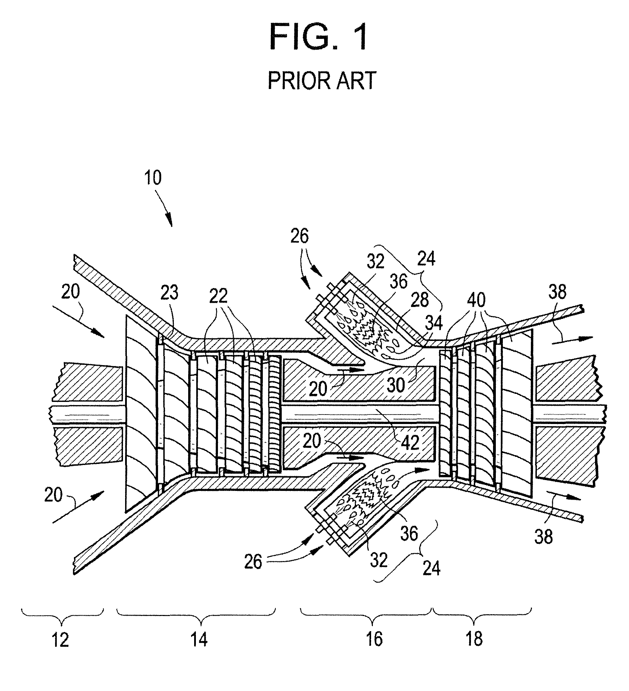

Combustion turbine engines are employed in many applications. In their most common applications, turbines are employed to produce thrust for airplanes and rotational power for the generation of electric power. Turbines generally operate by producing rotational energy through the expansion of the gases resulting from combustion of a fuel mixture with an oxidizer, such as air. As shown in FIG. 1, a turbine engine generally designated by reference numeral 10 includes four main components: an intake section 12, a compression section 14, a combustion section 16, and a turbine section 18. In use, the compression section 14 draws a fluid stream 20 (e.g., air) through the intake section 12 and compresses the fluid stream 20 using a series of bladed rotors 22 and stators 23. The compressed air 20 is then directed to the combustion section 16, wherein it is mixed with a fuel (e.g., kerosene, diesel, gasoline, hydrogen, biodiesel, liquefied natural gas, and so forth) and ignited. For can-annular type combustors 24 such as is shown in the Figure, multiple arrays of premixers 26 are disposed at one end of a plenum 28 and at another end of the plenum 44 is a duct 30 (i.e., a transition piece from can to annular sector). For can type combustors, multiple premixers are typically employed. The premixers 26 mix the fuel 32 with most of the fluid 20 in a reverse flow liner prior to delivering the mixture into the plenum 28, where it burns, after which it is mixed with the remainder of the compressed fluid stream 20 that flows through apertures 34 (dilution holes) disposed in the plenum 28. The resulting fuel mixture is employed to support a combustion reaction 36 within the plenum 28, which produces an exhaust 38. The exhaust 38 passes through the turbine section 18, which causes rotors 40 within the turbine section 18 to rotate. In many cases, the compression section 14 and the turbine section 18 are mechanically connected via a shaft 42, such that the combustion reaction powers the compression section, i.e., causes the bladed rotors 22 within the compression section 14 to rotate. The exhaust 38 is vented out of the turbine section 18. Turbines comprising alternative designs can comprise multiple shafts. It should be apparent that gas turbines including premixers of these types have a combustion section that is relatively lengthy.

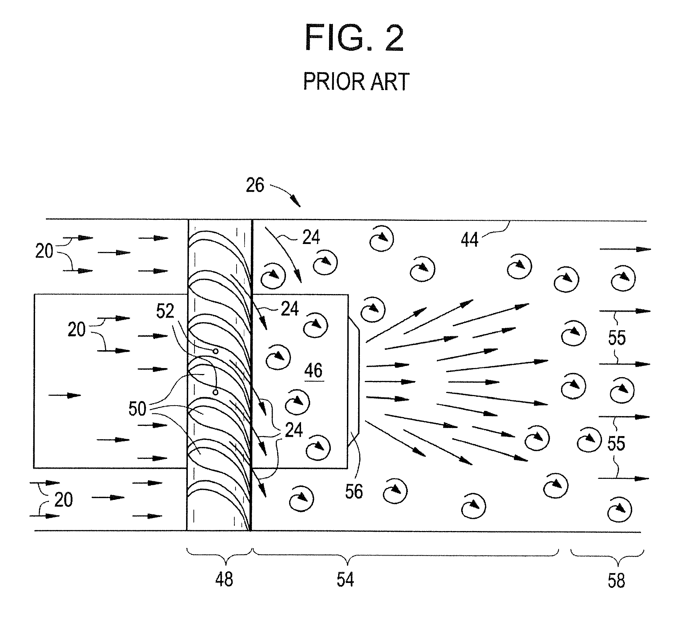

As shown more clearly in FIG. 2, each premixer 26 is disposed within a can 44 and generally includes a cross flow fuel injector 46 and a mixer portion (also referred to as a swirler) 48 radially disposed about the fuel injector. The mixer portion 48 typically comprises an annular array of angled vanes 50 that are fixed on a first end to the fuel injector 46 and fixed on a second end to the can 44. Disposed between or onto the vanes 50 are secondary fuel injection nozzles 52, which are capable of supplying fuel 32 to the compressed fluid stream 20 that flows between the angled vanes 10. The fluid stream 20 generally comprises compressed air (or a suitable oxidant for the fuel) that flows from a compression section 14 (FIG. 1) of the turbine 10. The angled vanes 50 create turbulence as the fluid stream 20 flows there through (e.g., swirl), which promotes the dispersion of fuel 32 within the fluid stream 20 to form a fuel premix 54. The fuel injector 46 further comprises a primary injection nozzle 56 that injects a primary fuel into the fuel premix 54, forming a fuel jet 55, downstream of the injector 56.

In use, the fuel premix 54 is ignited downstream of the premixer in the area 58, which further results in the primary combustion zone 58. The products of the combustion reaction are then forced through the turbine section via a nozzle 30 (see FIG. 1) in fluid communication with the combustor 24. The turbine produces work, e.g., rotation of a shaft.

In these prior art premixer configurations, a notable pressure drop of about 4 to 5 percent or more is observed across the mixer and combustor portion 16 as it restricts flow of the compressed fluid stream 16 therethrough. Because of this, the efficiency of the turbine is reduced. In addition, the mixer portion 48 causes a vortex to form, i.e., a spiral motion of fluid within a limited area. The effect of the vortex is that the fuel mixture 58 can comprise a fuel-rich mixture near the can 44 and a fuel-lean mixture near the centerline of the can 44, which can result in localized variances in combustion, leading to further decreases in turbine efficiency, acoustic disturbances and NOx emissions. The stability of the combustion reaction is important to the performance of a turbine. One of the many variables that affect the stability of the combustion reaction is the mixture of the fuel. If the fuel is not mixed properly, the combustion reaction will be inefficient and fluctuating within the volume of the combustor, such as too rich alternating with too lean operation, wherein the system will become unstable. In addition, if the combustion reaction is too lean, transients in fueling can cause surging, which reduce the service life of the engine, and also cause extinction of combustion (commonly referred to as lean blow out). Even further, the stability of the mixture affects the NOₓ and soot produced by the engine, as well as the combustion temperatures.

What is needed in the art is a more efficient fuel premixer for combustion turbine applications, and methods for its operation, that are capable of providing a sufficient fuel mixture without the undesirable reduction in efficiency caused by high pressure drops. A reduction in the combustor length is also desired to enhance close-coupling of the compressor to the turbine. In addition, re-heat cycles can benefit from the compactness and low-pressure drop across the combustors used in such cycles, thus increasing their efficiency.

### BRIEF SUMMARY

Discussed herein are airfoil fuel premixers, combustion turbines employing airfoil fuel premixers, and methods for their use. In one embodiment, a gas turbine comprises a compression section configured for compressing a fluid stream; a combustion section coupled to the compression section and adapted to receive the compressed fluid stream and combust a fuel, the combustion section comprising a premixer, the premixer comprising an annular array of Coanda profiled fuel injected airfoils adapted to inject the fuel at an angle substantially tangential to the airfoil to provide a Coanda effect; and a turbine section in fluid communication with the combustion section.

In another embodiment, a process for premixing a fuel and an oxidant in combustion system comprises compressing a fluid stream containing the oxidant and flowing the compressed fluid stream into the combustion system, the combustion system comprising a premixer comprising an annular array of Coanda profiled fuel injected airfoils, each one of the airfoils having an leading edge, a fuel injection opening configured to inject fuel at about the leading edge, and a trailing edge, wherein the compressed fluid stream flows in a direction from the leading edge to the trailing edge; injecting fuel at about the leading edge at an angle substantially tangential to the airfoil to provide a Coanda effect; forming a diffusion like flame directly behind the trailing edge; and forming a flame having multiple lean and rich regimes, wherein each one of the lean flame regimes forms between the airfoils and each one of the rich flame regimes forms behind each one of airfoils.

In another embodiment, a fuel/oxidant premixing device comprises an annular array of Coanda profiled fuel injected airfoils configured to receive a fluid stream containing the oxidant, wherein each one of the airfoils comprises a leading edge, a trailing edge and a fuel injection opening configured for introducing fuel at about the leading edge to provide a Coanda effect.

The above described and other features are exemplified by the following detailed description and figures.

### BRIEF DESCRIPTION OF THE DRAWINGS

Embodiments of the present invention will now be described, by way of example only, referring to the figures wherein like elements are numbered alike:
FIG. 1 illustrates a sectional view of a prior art gas turbine;
FIG. 2 illustrates a sectional view of a prior art premixer employed in the gas turbine of FIG. 1;
FIG. 3 illustrates a sectional view of a combustion section including a premixer in accordance with the present disclosure;
FIG. 4 illustrates a perspective view of the premixer of FIG. 3; and
FIGS. 5 and 6 illustrate top down sectional views of the premixer of FIG. 3 during operation of the gas turbine.

### DETAILED DESCRIPTION

Disclosed herein is a premixing device (i.e., a premixer) that utilizes a profiled fuel injected airfoil configuration to provide a Coanda effect and effectively premix, ignite and stabilize the fuel and oxidant in the proposed combustor. The Coanda effect is a fluid dynamics phenomenon wherein a fluid injected tangential to a curved surface, such as air and/or fuel, will tend to follow a curved surface upon contact therewith. For example, air passing over the top surface of an airfoil will tend to follow the curved surface of the airfoil. By mixing the fuel and air (i.e., oxidant) in this manner, the premixer is capable of providing a dual or triple-flame combustion pattern that provides a stable combustion reaction and reduces undesirable emissions, such as NOₓ, non-reacted hydrocarbons (HC), and carbon monoxide (CO). In addition, the pressure drop across the premixer is significantly lower than that of conventional premixer designs; therefore a reduced amount of energy is utilized to premix the fuel mixture, thus yielding an increase in turbine efficiency. Still further, the premixers disclosed herein provide enhanced turndown ratios (ability to control the combustion over a suitable range of operating pressures and temperatures), resistance to flashback, and also increases the flameout or blowout margin for the combustors. In addition, several stages of the premixers disclosed within may be used in the gas turbine in a re-heat cycle application, with minimum efficiency loss due to pressure losses inferred in typical re-heat cycles. Relative to the prior art gas turbines, the overall length of the combustion section is reduced, thereby improving re-heat cycles, minimizing pressure drops and increasing turbine efficiency. In other words, the premixing device disclosed herein permits close coupling of the compression section to the turbine section than that previously possible.

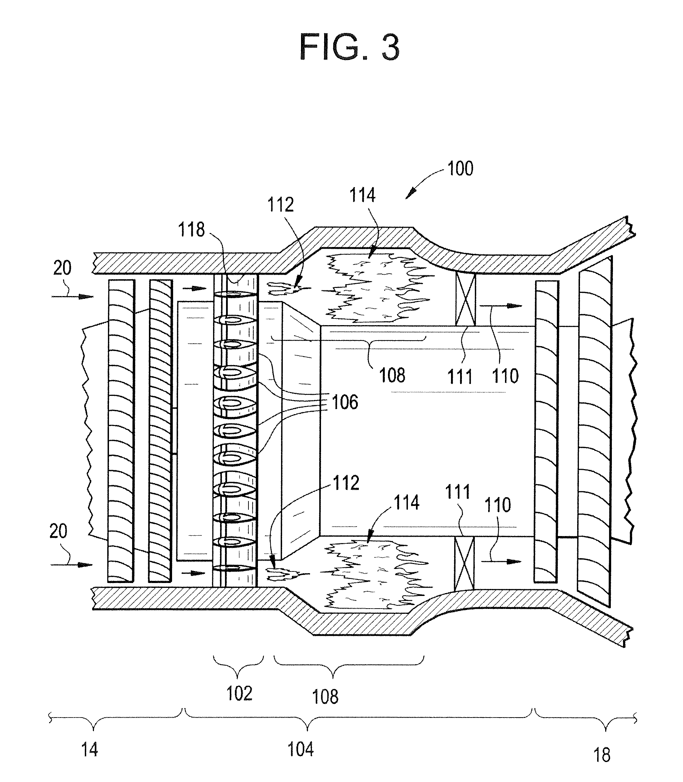

Referring now to FIG. 3, an exemplary gas turbine 100 is illustrated having one or several premixers 102 annularly disposed within the combustion section 104, which is intermediate to and in fluid communication with compression 14 and turbine sections 18 as discussed above, or may be disposed downstream within the expansion section 18. The premixer 102 in this example is shown integrated within the combustion section 104 and provides close coupling of the compression and turbine sections than that previously attainable. For example, the overall length of the combustion section can be more than half that employed in prior art combustion sections (such as the combustion section shown in FIG. 1). It should be apparent that the gas turbine including the premixer 102 could be modified and used in any combination with traditional combustors, if desired, when used downstream in section 18. In other words, the gas turbine could include a combustor such as that discussed in relation to FIG. 1, wherein a downstream combustor is added to include the premixer 102 in the section 18. Thus, it should also be apparent that more than one premixer 102 can be utilized between various stages of the gas turbine, e.g., multiple re-heat combustion stages in-between turbine stages 18. By way of example, the premixer 102 can be used in multiple locations between stages of the compression section, of the turbine section or combinations thereof. In this manner, reheat cycles are significantly improved and gas turbine efficiency enhanced.

The premixer 102 comprises an annular array of Coanda profiled fuel injected airfoils 106. The compressed air stream 20 from the compression section 14 flows through the profiled fuel injected airfoils 106, wherein fuel is then injected and because of the Coanda effect flows almost tangentially to the airfoil surface at high speeds (e.g., 100 to 500 m/s) to provide a particular combustion pattern 108 from the resulting fuel/air mixture and create an exhaust 110, which is then fed to the turbine section 18 via nozzle 111. The combustion pattern includes a diffusion-like flame 112, which has been found to be extremely stable, and a secondary flame region 114 characterized by multiple regimes going from very lean to richer while increasing the so-called premixedness of the fuel and air. The pattern is replicated for each of the airfoils due to the combination of pitch and fuel to air ratio. The result is a highly uniform flame temperature.

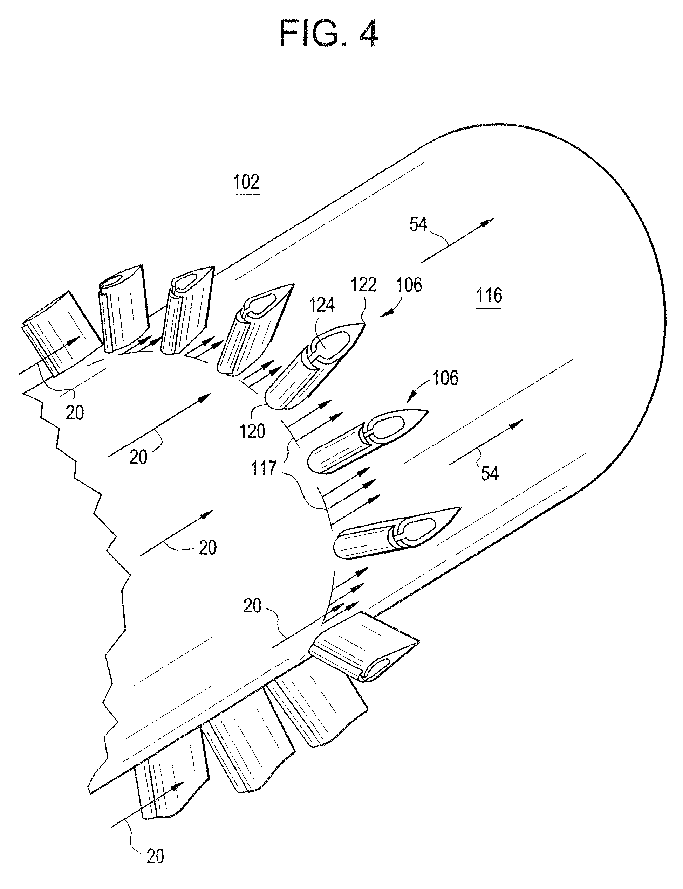

As shown more clearly in FIG. 4, the premixer 102 includes an annular array of Coanda profiled fuel injected airfoils 106. The airfoils 106 are shown connected on a first end to a hub 116, and are further connected on a second end to the combustion section housing 118 (shown in FIG. 3). Optionally, both the hub and the housing areas between two consecutive airfoil 106 may also have fuel injection ports 117 over a Coanda profile, see FIG.4. The ports 117 can be in the form of multiple orifices or may comprise a single orifice, e.g., a slot. Each airfoil 106 includes a leading edge 120 and a trailing edge 122, wherein the compressed air stream 20 first contacts the leading edge 120. One large and/or a series of fuel injection slots 124 are disposed near the leading edge 114 of the airfoil 106 and are configured to introduce the fuel tangentially to the airfoil surface at high speeds to form the fuel premix 54. Introduction through the series of slots will determine air entrainment between the slots and mixing with the high momentum fuel. The resulting flow is a mixture of fuel and air in the growing boundary layer close to the airfoil wall. The Coanda effect preservation along the airfoil length, due to the reduced through mixing - but still high momentum of the fuel and air mixture, forces the boundary layer attachment to the airfoil wall. Hence, due to the high momentum of the fuel introduced through the relatively small slot 118, and preserved even after mixture with the entrained air, a relatively high fuel/air mixture velocity results, much larger than a local turbulent flame speed. Thus flame holding as well as flash back into the vanes area is prevented. Although the fuel-to-air ratio varies across this boundary layer, the mixture is complete within a small distance from the fuel introduction as the resulting boundary layer growths. The airfoil profile has thus two functions: one is to maintain attachment of the fuel/air mixture to the wall, while maximizing the boundary layer growth rate in the stream-wise direction. As a result, the fuel and air mixture boundary layer is constantly growing and depending on the design of the airfoil profile, two opposite fuel/air boundary layers may become close to each other and even in contact.

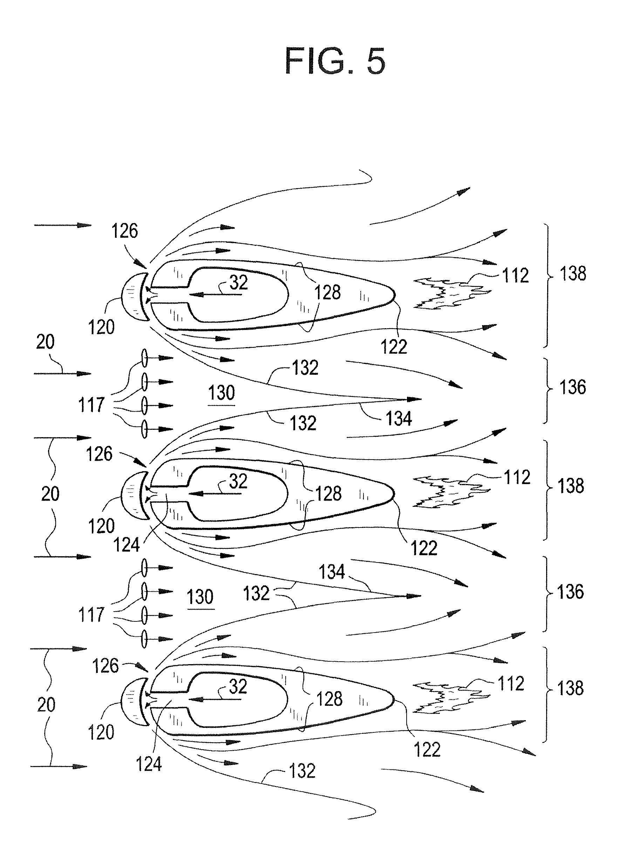

Referring now to FIG. 5, which is a circumferential section of the said combustor, at about the location 126 of the fuel introduction (i.e., at the slot opening 124) a flame cannot therefore exist or stabilize, and it is pushed downstream. Similarly, as the fuel flows along the sidewall 128 in the immediate proximity of the profiled airfoil 106, the fuel concentration remains close to 100% because of the Coanda effect. As a result, combustion cannot occur there either and the fuel is pushed even further downstream at high velocity. Depending on the radial distance between the fuel slots along the vane height, the air entrained between the fuel slots will determine the concentration and the velocity in the formed boundary layer downstream of the fuel injection slot 126. As the velocity and concentration of fuel are measured away from the wall of the airfoil, the profile differs, wherein the concentration monotonically decreases towards a fuel-free area, e.g., 130 (i.e., adjacent to a fuel concentration boundary layer edge 132) and the velocity inside the boundary layer first increases, through a maximum (depending on the profile, it may be closer to the half boundary layer height) and then decreasing towards the velocity of the free stream of the air. It is a question of the design of the cascade how these profiles will develop. However, the attachment of the boundary layer 132 to the airfoil wall 128, the local conditions (temperature and concentration of the fuel) as well as the flow strain determines the non-existence or the non-stabilization of the flame within the airfoils. At some point downstream however, the flame does exist, in the space between the airfoils, within the diffusing area of the vane interstice. The point of the flame front will generally depend on the location of the coalescence point 134 of the two boundary layers 132 from the two facing airfoils (upper and lower surfaces). Downstream from the coalescent point 134, a lean premixed zone 136 is thus created. The degree of premixedness is still high but the local fuel-to-air ratio increases further downstream as one moves outside the trailing edges 122 of neighboring airfoils; eventually a perfect flue/air mixture at higher equivalence ratio evolves out of the stator stage (downstream at a distance equal to at least one pitch distance between the vanes).

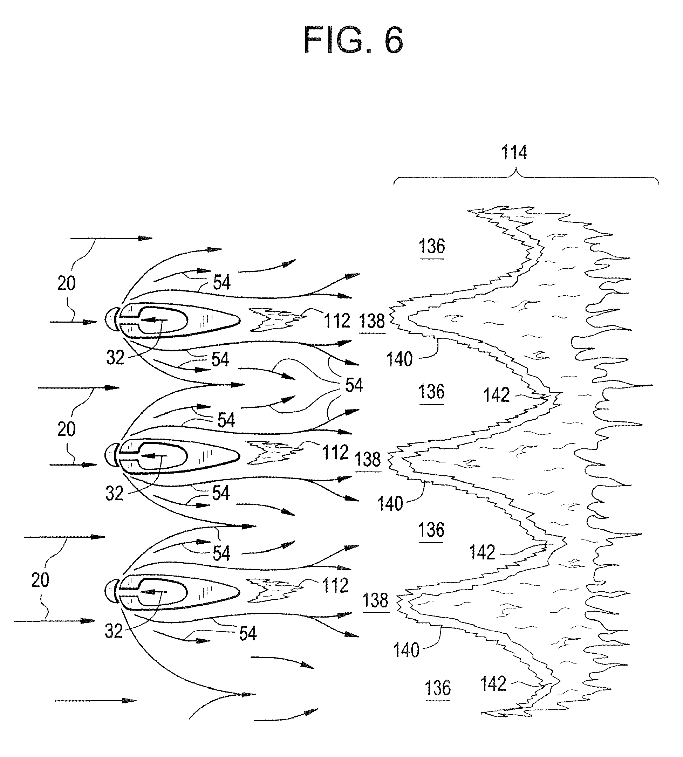

Close to the trailing edge 122 of each airfoil 106 there will be an area of less premixedness, again depending on the introduction of the fuel through the slots and the profile of the airfoils. Due to the Coanda effect, a more diffusion-like flame 112 is created downstream from the trailing edge 122 that sustains exceptional stability of the flame. The diffusion-like flame 112 (FIG. 6) effect comprises enough oxidant diffused therein to remain lit during operation of the system, however does not comprise enough oxygen to consume all of the fuel 32 therein. Because of this, the diffusion-like flame is extremely stable. Moreover, the combustion of the diffusion-like flame 112 assists the dispersion of downstream fuel mixture 54 by creating additional turbulence. Other than the diffusion flame 112, the fuel-rich areas 138 are too rich to ignite due to high velocities between the vanes. Moreover, as noted above, the fuel-lean areas 136 are too lean to ignite between the vanes. However, as shown more clearly in FIG. 6, downstream (with respect to the flow direction of the fluid stream 20) from the fuel-lean areas 136 and the fuel-rich areas 138, diffusion between the two regions 136, 138 occurs due to turbulence created by the airfoils 106 and the diffusion-like flame 112, which is sufficient to support flame 114. The fuel-rich flames 140 and the fuel-lean flames 142 form flame 114, which is the resulting product of the combustion reaction. The flame front of the fuel-rich flames 140 is slightly upstream from the flame front of the fuel-lean flames 142.

It has been unexpectedly found that the triple-flame combustion reaction, i.e., lean premix, rich premix, and diffusion-like flames, provides increased combustion stability compared to prior art combustion reactions. These flames are also known as tri-brachial flames. Bi-brachial flames can also exist, combining diffusion flames with either lean or rich premixed flames. While not wanting to be bound by theory, it is believed the enhanced stability effect is due to the ability of the fuel-rich flames 140 and fuel-lean flames 142 to support combustion as the dynamics of the combustion reaction experiences transients, such as variations in the amount of fuel 32 supplied thereto and/or changes in the rate of the fluid stream 20, while stoichiometric conditions ensure flame stabilization. For example, as the amount of fuel 32 supplied to the turbine is increased (e.g., to increase the power produced from the turbine), the fuel 32 supplied to the combustion section 100 increases without an immediate increase in the rate of the fluid stream 20, which essentially increases the fuel-to-air ratio. As a result of this condition, the fuel-rich areas 138 will increase in area and the fuel-rich flames 140 will be pushed downstream until they reach a point at which sufficient air has diffused therein to support combustion. Simultaneously however, the addition fuel 32 supplied to the combustion section 100 increases the amount of fuel 32 that diffuses into the fuel-lean areas 136, which is more conducive for combustion and the fuel-lean flames 142 advance toward the fuel-lean area 136. In this scenario, the fuel-lean flames 142 support a majority of the combustion reaction.

In another example, when fueling to the combustion chamber 100 is decreased (e.g., to reduce power) the amount of fuel 32 supplied to the fuel-rich areas 138 is also decreased, which is more conducive to combustion, and causes the fuel-rich flames 140 to advance toward the fuel-rich area 138. Simultaneously, the amount of fuel 32 that diffuses into the fuel-lean area 136 is further reduced, causing the fuel-lean flames 142 to be pushed further downstream to a point at which sufficient fuel 32 can diffuse therein to support combustion. Under these conditions, the fuel-rich flames 140 support a majority of the combustion process.

In yet another example, when even further fuel flow reduction is performed to further reduce power, only some of the fuel slots can be used thus still maintaining a good stabilization mechanism with respect to the fuel-rich areas 138, while still achieving acceptable profile and pattern factors of the combustion products.

The premixer 102 has also been found to reduce the pressure drop associated with generating a sufficient fuel mixture 58. To be more specific, the pressure drop across each airfoil 106 reduces the pressure of the compressed fluid streams 20 by less than or equal to about 3%, or even less than or equal to about 2%, or even less than or equal to about 1%. As a result, the overall efficiency of any turbine system employing the premixer 102 is significantly greater than those employ prior art premixers of the type discussed above. This is particularly important for simple cycle gas turbines, and very important for the introduction of re-heat concepts, wherein several of combustor stages as described can be used for enhanced efficiency and utilization of most of the oxygen down to 1% by volume in the combustion products.

Further, combustion turbines employing the premixers 102 exhibit an excellent turndown ratio, which is defined as the ability of the combustion turbine to maintain a sufficient combustion reaction over a range of operating conditions. For example, the turndown ratio exhibited by turbines employed for jet aircraft is desirably from a state of low power generation to about full power generation.

It should be apparent to those skilled in the art that the design of the gas turbine can vary significantly. For example, the design of the combustion section 100 can be modified to include multiple premixers 102 or be modified with a combustor employing one or more premixers 102. In one alternative embodiment, two or more airfoil premixers 102 can be disposed adjacent one another, such that the fluid stream 20 passes through a first airfoil premixer and then through a second airfoil premixer. Moreover, the premixers 102 discussed herein are specifically associated with gas turbines and used for applications such as power generation. However, it is to be apparent that these mixers can be employed in any combustion turbine system. Exemplary systems include, aircraft applications (e.g., passenger and military jets), land vehicles (e.g., tanks, trains, and so forth), power generation (e.g., electrical power), and so forth.

The premixers 102 can be utilized with any fuel source, such as natural gas, liquefied natural gas, hydrogen, syngas, kerosene, jet fuels, gasoline, ethanol, diesel, biodiesel, liquid, pre-heat pre-vaporized fuels, and so forth. It is to be understood that the specific configuration of the premixer 102, the airfoils 106, fuel injection slots 118 and so forth, can be configurable based on the specific fuel employed as well as other variables. For example, for gaseous fuels, the fuel injection slot 124 can be configured to comprise a row of holes through which the gas can be supplied to the fluid stream 20. The pressure at which the fuel is supplied to the system will also be configured based on the specific application. However, the fuel pressures employed are greater than the pressure of the compressed fluid stream 20.

In another embodiment, multiple fuel injection slots 124 can be employed on a single airfoil 106 and/or rows of holes, or even combinations comprising fuel injection slots 124, fuel injection holes, and so forth. Further, although the fuel injection slots 124 are illustrated in close proximity to the leading edge 120 of the airfoil 106, it is to be apparent that the fuel injection slots 124, or any slot, hole, or other fuel injector, can be configured such that fuel 32 is injected from any portion or portions of the airfoil 106. For example, in one embodiment, a series of fuel injection holes can be disposed on the leading edge 120 in combination with fuel injection slots 124 that are disposed. In another embodiment, two rows of fuel injection slots can be employed, wherein one slot is disposed close to the leading edge 120 and a second row is disposed close to the trailing edge 122.

The specific airfoil design and pitch employed for the premixer 102 will be chosen based on the application. Variables such as the rate of the fluid stream 20, the specific fuel 32 employed, and others, will affect these parameters, which are well within the skill of those in the art. In addition, the surfaces, e.g., 128, of the premixers 106 that are exposed to the fluid stream 20 can comprise surface features, such as dimples, divots, and or other surface features that can increase or decrease turbulence across the surface of the airfoil 106 and/or alter the flow of the fluid stream 16 there over. In one example, a suitable premixer can comprise airfoils having a dimpled surface (e.g., similar to a golf ball) to alter the flow of the fluid stream over the airfoil. In another embodiment, the airfoil can comprise a roughed surface finish to increase turbulence over the surfaces of the airfoil.

The airfoils can be manufactured utilizing machining processes such as, milling, grinding, casting, electric discharge machining (EDM), and so forth. The materials employed can be any metals such as superalloys comprising nickel, iron, and cobalt-based alloys comprising combinations of chromium, tungsten, molybdenum, tantalum, niobium, titanium, aluminum, as well as combinations comprising at least one of the foregoing. For example, a cobalt-chromium superalloy can be employed, such as Stellite® 6B (commercially available from the Deloro-Stellite Company, Swindon, UK), which comprises: cobalt, chromium, nickel, iron, silicon, carbon, molybdenum, and manganese. Superalloys are capable of providing improved resistance to erosion compared to common metallic alloys (e.g., stainless steels) due to their increased hardness Rockwell hardness (e.g., about 40 to about 50 measured on the Rockwell C-scale). In addition, superalloys are capable of maintaining their strength in operating conditions equal to or even greater than about 1,200° F (650° C).

Optionally, the airfoils 106 can be configured with a thermal barrier coating to increase their continuing operating temperature. Exemplary thermal spray methods comprise: air plasma spray (APS), vacuum plasma spray (VPS), high velocity oxy-fuel (HVOF), and so forth.

Unless defined otherwise, technical and scientific terms used herein have the same meaning as is commonly understood by one of skill in the art to which this invention belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation. If ranges are disclosed, the endpoints of all ranges directed to the same component or property are inclusive and independently combinable (e.g., ranges of "up to about 25 wt.%, or, more specifically, about 5 wt.% to about 20 wt.%," is inclusive of the endpoints and all intermediate values of the ranges of "about 5 wt.% to about 25 wt.%," etc.). The modifier "about" used in connection with a quantity is inclusive of the stated value and has the meaning dictated by the context (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Furthermore, as used herein, "combination" is inclusive of blends, mixtures, alloys, reaction products, and the like.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A gas turbine (100) comprising:
a compression section (14) configured for compressing a fluid stream (20);
a combustion section (104) coupled to the compression section (14) and adapted to receive the compressed fluid stream and combust a fuel (32), the combustion section comprising a premixer (102), the premixer comprising an annular array of Coanda profiled fuel injected airfoils (106) adapted to inject the fuel (32) at an angle substantially tangential to the airfoil to provide a Coanda effect; and
a turbine section (18) in fluid communication with the combustion section (104).

2. The gas turbine of Claim 1, wherein the Coanda profiled fuel injected airfoils (106) comprise a leading edge (120) facing the compression section (14), a fuel injection opening (124) configured to inject fuel (32) at about the leading edge (120), and a trailing edge (122).

3. The gas turbine of any one of the preceding claims, wherein the premixer (102) is integrated within a transition duct of the combustion section of the gas turbine.

4. The gas turbine of Claim 1, wherein the premixer (102) is disposed within a combustor (24) fluidly coupled to the compression section (14).

5. The gas turbine of Claim 1, wherein the fuel (32) comprises natural gas, liquefied natural gas, hydrogen, syngas, kerosene, jet fuels, gasoline, ethanol, diesel, biodiesel or mixtures thereof.

6. The gas turbine of Claim 1, wherein the premixer (102) during operation of the gas turbine (100) is configured to provide a pressure drop of less than 5 percent.

7. The gas turbine of Claim 1, wherein the premixer (102) is configured to provide a triple-flame combustion reaction (112, 140, 142) during operation of the gas turbine (100).

8. The gas turbine of Claim 1, wherein the premixer (102) is configured to provide a diffusion-like flame (112) directly behind the trailing edge (122) during operation of the gas turbine (100).

9. The gas turbine of Claim 1, further comprising at least one additional premixer (102) disposed between stages (22, 40) of the compression section (14), the turbine section (18) or both the compression section (14) and the turbine section (18).

10. A process for premixing a fuel (32) and an oxidant (20) in a combustion system, the process comprising:
compressing a fluid stream (20) containing the oxidant and flowing the compressed fluid stream into the combustion system, the combustion system comprising a premixer (102) comprising an annular array of Coanda profiled fuel injected airfoils (106), each one of the airfoils (106) having an leading edge (120), a fuel injection opening (124) configured to inject fuel at about the leading edge (120), and a trailing edge (122), wherein the compressed fluid stream flows in a direction from the leading edge (120) to the trailing edge (122);
injecting fuel (32) at about the leading edge (120) at an angle substantially tangential to the airfoil (106) to provide a Coanda effect;
forming a diffusion like flame (112) directly behind the trailing edge (122); and
forming a flame (114) having multiple lean and rich regimes (140, 142), wherein each one of the lean flame regimes (142) forms between the airfoils (106) and each one of the rich flame regimes (140) forms behind each one of airfoils (106).
